# EUROPEAN PATENT APPLICATION

(11) **EP 4 635 749 A1**
(43) Date of publication of application: **22.10.2025**
(21) Application number: 23903023.2
(22) Date of filing: 22.08.2023
(51) Int. Cl.: B60C 7/00, B60B 9/04, B60C 13/00

(54) **NON-PNEUMATIC TIRE AND SMALL-SIZED MOBILITY**

(30) Priority: 16.12.2022 JP 2022201605
(71) Applicant: BRIDGESTONE CORPORATION, Chuo-ku Tokyo 104-8340 (JP)
(72) Inventor: KOBAYASHI Taichi, Tokyo 104-8340 (JP); ISHIKAWA Naoko, Tokyo 104-8340 (JP)
(74) Representative: Marks & Clerk LLP
(86) International application number: PCT/JP2023/030209
(87) International publication number: WO 2024/127718

(57) **Abstract**

Provided is a non-pneumatic tire with high visibility day and night while ensuring sufficient durability, as well as small mobility vehicles equipped with these tires. The non-pneumatic tire, comprises an inner rim that is to be attached to an axle; an outer rim that surrounds the inner rim from an outer side in a radial direction and has a tread member attached to an outer circumferential surface thereof; and a plurality of connecting members that connect an outer circumferential surface of the inner rim to an inner circumferential surface of the outer rim, wherein at least one of the inner rim, the outer rim, and the connecting member is formed with a visual recognition area, on a surface that intersects with an axial direction of the outer rim, with optical properties that have a reflectance of 40% or more and 80% or less for light in a first wavelength range of 500 nm or more and 510 nm or less, and a reflectance ratio of 0.4 or less, which is a ratio of a minimum reflectance in a second wavelength range of 420 nm or more and 650 nm or less to a maximum reflectance in the second wavelength range.

## Description

### TECHNICAL FIELD

This disclosure relates to a non-pneumatic tire and a small mobility vehicle.

### BACKGROUND

In recent years, vehicles with low noise and different structures from conventional vehicles, such as electric vehicles and small mobility vehicles, have become more widespread. In addition, in relation to these changes in vehicles, there is an increasing number of cases where non-pneumatic tires are being used on wheels. In some cases, the wheels are painted for design characteristics and visibility.

Patent Document 1 discloses a non-pneumatic tire. This non-pneumatic tire has an inner rim that surrounds the outer circumferential surface of a metal rim from the outer side in the radial direction, an outer rim that surrounds the inner rim from the outer side in the radial direction, and a plurality of elastically deformable connecting members that connect the outer circumferential surface of the inner rim and the inner circumferential surface of the outer rim. In this non-pneumatic tire, the inner rim is formed of synthetic resin material, a pair of clamping flange sections are formed on the outer circumferential surface of the rim, and the rim comprises a first segment and a second segment.

Patent Document 2 discloses a wheel for an automobile. This automobile wheel is painted with a glow-in-the-dark paint on at least part of its exterior surface. This automobile wheel is said to improve safety by improving visibility from the sides of the automobile at night.

Patent Document 3 discloses a paint for painting tires, a tire painting method, and a painted tire. This automobile wheel is painted with a glow-in-the-dark paint on at least part of its exterior surface. It has been indicated that painted tires can meet the needs of customers for automobiles, etc., because they can be colored according to preference, and that customers who have purchased automobiles with the same body color can differentiate themselves from each other by installing painted tires of different colors, and that visibility is improved. Patent Document 3 describes that tires (rubber tires) normally rotate at high speeds, and when turning, lateral force acts on them, causing them to distort and deform, so the coating film formed on the tires must have high durability. This document also points out the problem that even if tires are painted using conventional paint, the paint will peel off when the tires rotate at high speeds or are subjected to lateral force, making them look worse.

Patent Document 4 discloses an outdoor air intake structure for a micro-mobility vehicle, which is one type of small mobility vehicles. Patent Document 4 indicates that micro-mobility vehicles often do not have a hood-like part like that of conventional vehicles.

Patent Document 5 discloses the front structure of a vehicle body. Patent Document 5 discloses that there are cases where it is difficult to secure space in the engine compartment, particularly in vehicle types such as light automobiles.

Patent Document 6 discloses a lighting dimming device for vehicles. This lighting dimming device for vehicles controls the light source for lighting based on the results of the headlight on/off judgment section. That is, the dimming amount instruction unit calculates dimming amounts at which the brightness of the plurality of light sources for lighting becomes equal based on the photopic or scotopic visual sensitivity for the light emitted by the plurality of light sources for lighting, generates light on/off signals to perform the calculated dimming, and send the generated light on/off signals to the drive circuit. Patent Document 6 explains that it is known that human visual sensitivity varies depending on the wavelength of light and the brightness of the surroundings, and that in order to eliminate differences in appearance due to display colors, the brightness of a display body emitting light of different colors needs to be corrected according to the emission wavelength and the brightness of the surroundings.

### CITATION LIST

### Patent Literature

PTL 1: WO 2022/114069 A1
PTL 2: JP H2-007694 A
PTL 3: JP 2012-106704 A
PTL 4: JP 2019-043188 A
PTL 5: JP 2013-014293 A
PTL 6: JP 2012-066605 A

### SUMMARY

### (Technical Problem)

For vehicles with low noise and different structures from conventional vehicles, such as electric vehicles (particularly small mobility vehicles), different safety measures are required than those required for conventional vehicles. Electric vehicles are quieter than vehicles with internal combustion engines and are more comfortable for passengers. However, there is a problem that the noise makes it difficult for pedestrians and cyclists on the road to tell when a vehicle is approaching. For this reason, for vehicles that are quieter and have a structure different from that of conventional vehicles, such as electric vehicles exemplified by small mobility vehicles, there is a demand for measures to improve visibility during the day, in the mornings and evenings, and at night, and thereby increase safety more than conventional vehicles.

Non-pneumatic tires, the adoption of which is increasing in line with the spread of small mobility vehicles, have a different structure and materials compared to conventional rubber tires. Therefore, in order to improve the visibility of non-pneumatic tires, it is necessary to make some modifications that differ from those used for conventional tires and wheels. For example, non-pneumatic tires are often made from synthetic resins rather than rubber. In addition, the deformation of non-pneumatic tires differs from that of conventional rubber tires, and the speed of the vehicle (small mobility vehicle) on which they are installed is relatively slow.

As discussed above, there is a demand for non-pneumatic tires that have high visibility both day and night while ensuring sufficient durability.

This disclosure was made in light of this situation, and its object is to provide a non-pneumatic tire that has high visibility both day and night while ensuring sufficient durability, as well as small mobility vehicles equipped with these tires.

### (Solution to Problem)

The non-pneumatic tire for achieving the above object comprises,
an inner rim that is to be attached to an axle;
an outer rim that surrounds the inner rim from an outer side in a radial direction and has a tread member attached to an outer circumferential surface thereof; and
a plurality of connecting members that connect an outer circumferential surface of the inner rim to an inner circumferential surface of the outer rim, wherein
at least one of the inner rim, the outer rim, and the connecting member is formed with a visual recognition area, on a surface that intersects with an axial direction of the outer rim, with optical properties that have a reflectance of 40 % or more and 80 % or less for light in a first wavelength range of 500 nm or more and 510 nm or less, and a reflectance ratio of 0.4 or less, which is a ratio of a minimum reflectance in a second wavelength range of 420 nm or more and 650 nm or less to a maximum reflectance in the second wavelength range.

The small mobility vehicle for achieving the above object comprises,
a vehicle body with an overall length of 3.4 m or less; and
wheels that support the vehicle body and allow the vehicle body to move, wherein
the wheel has a non-pneumatic tire, and
the non-pneumatic tire comprises,
   an inner rim that is to be attached to an axle;
   outer rim that surrounds the inner rim from an outer side in a radial direction and has a tread member attached to an outer circumferential surface thereof; and
   a plurality of connecting members that connect an outer circumferential surface of the inner rim to an inner circumferential surface of the outer rim, wherein
at least one of the inner rim, the outer rim, and the connecting member is formed with a visual recognition area, on the surface exposed on the side of the vehicle body,, with optical properties that have a reflectance of 40 % or more and 80 % or less for light in a first wavelength range of 500 nm or more and 510 nm or less, and a reflectance ratio of 0.4 or less, which is a ratio of a minimum reflectance in a second wavelength range of 420 nm or more and 650 nm or less to a maximum reflectance in the second wavelength range.

### (Advantageous Effect)

According to the present disclosure, it is possible to provide a non-pneumatic tire that has high visibility both day and night while ensuring sufficient durability, as well as small mobility vehicles equipped with these tires.

### BRIEF DESCRIPTION OF THE DRAWINGS

In the accompanying drawings:
FIG. 1 is a side view of a non-pneumatic tire according to this embodiment;
FIG. 2 is a side view of a small mobility vehicle according to this embodiment;
FIG. 3 is a cross-sectional view of Figure 1 along the line III-III.
FIG. 4 is a graph providing the distribution of reflectance for each wavelength for each test piece in Example 1;
FIG. 5 is a graph providing the distribution of reflectance for each wavelength for each test piece in Example 2;
FIG. 6 is a graph providing the distribution of reflectance for each wavelength for each test piece in Example 3; and
FIG. 7 is a graph providing the distribution of reflectance for each wavelength for each test piece in Example 4.

### DETAILED DESCRIPTION

A non-pneumatic tire and a small mobility vehicle equipped with the tires according to an embodiment of the present disclosure will be described with reference to the drawings.

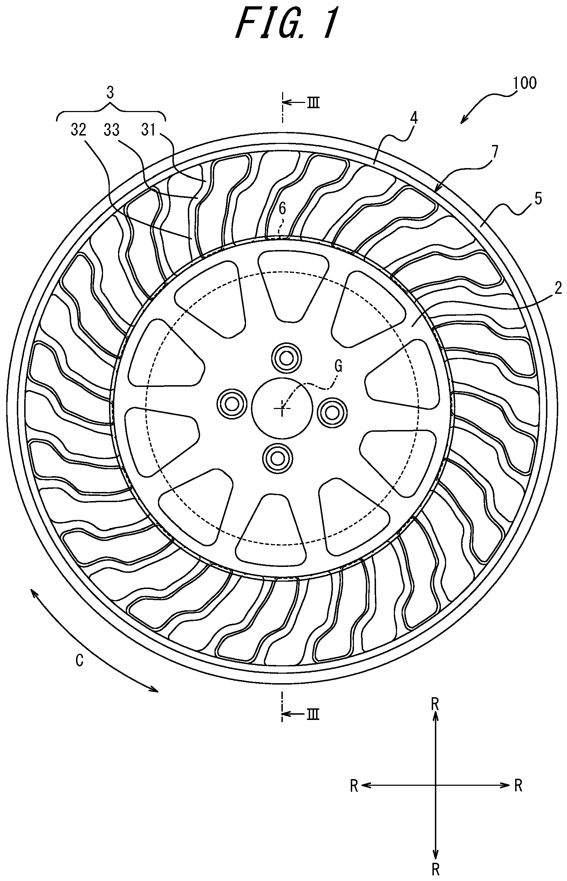

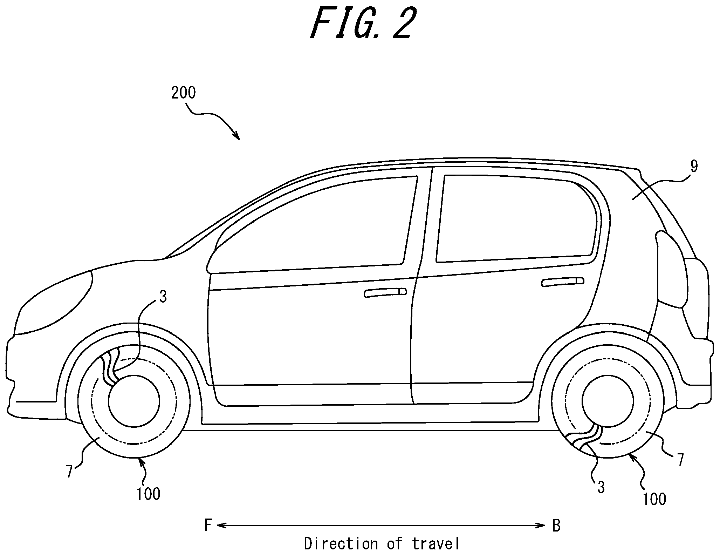

Figure 1 illustrates a non-pneumatic tire 100 (hereinafter, referred to as a tire 100) according to the present embodiment. Figure 2 illustrates a side view of a small mobility vehicle 200 equipped with the tires 100.

First, an overview of the tire 100 (see Figure 1) and the small mobility vehicle 200 (see Figure 2) will be described. The tire 100 is used on, for example, cars, bicycles, motorcycles, and electric wheelchairs with handlebars and the like. In the following, a case in which the tire 100 is installed on an automobile, particularly the small mobility vehicle 200, will be described as an example.

The tire 100 comprises, as illustrated in Figure 1, an inner rim 6 that is to be attached to an axle; an outer rim 4 that surrounds the inner rim 6 from the outer side in the radial direction and has a tread member 5 attached to the outer circumferential surface thereof; and a plurality of connecting members 3 that connect the outer circumferential surface of the inner rim 6 to the inner circumferential surface of the outer rim 4.

In the tire 100, at least one of the inner rim 6, the outer rim 4, and the connecting member 3 has a visual recognition area, on a surface that intersects with the axial direction of the outer rim 4, with optical properties that have a reflectance of 40 % or more and 80 % or less for light in a first wavelength range of 500 nm or more and 510 nm or less, and a reflectance ratio of 0.4 or less, which is the ratio of the minimum reflectance in a second wavelength range of 420 nm or more and 650 nm or less to the maximum reflectance in the second wavelength range.

The tire 100 can achieve high visibility both day and night while ensuring sufficient durability.

The small mobility vehicle 200 is a small vehicle with the tires 100 installed as illustrated in Figure 2. The small mobility vehicle 200 comprises a vehicle body 9 with an overall length of 3.4 m or less, and the tires 100 as wheels that support the vehicle body 9 and allow the vehicle body 9 to move. In the small mobility vehicle 200, the surface of at least one of the inner rim 6, the outer rim 4, and the connecting member 3 of the tire 100 illustrated in Figure 1 that intersects with the axial direction (direction along an axial center G) of the outer rim 4 faces the side of the vehicle body 9 illustrated in Figure 2. The side of the vehicle body 9 refers to the left or right side when facing forward in the direction of travel of the small mobility 200 (the direction F in Figure 2). The direction B in Figure 2 indicates the rear. In addition, the overall length of the vehicle body 9 is the length of the vehicle body 9 in a direction along the direction of travel of the small mobility vehicle 200.

In the small mobility vehicle 200, the tire 100 can realize high visibility both day and night while ensuring sufficient durability.

The tire 100 and the small mobility vehicle 200 will be described in detail below.

As illustrated in Figure 1, the tire 100 comprises a wheel portion 2 that is to be attached to the axle of a vehicle such as the small mobility vehicle 200 (see Figure 2); a tire portion 7 that is arranged on the outer circumferential surface of the wheel portion 2 and has the inner rim 6, the outer rim 4, and the connecting member 3; and a tread member 5 that is arranged on the outer circumferential surface of the tire portion 7. The wheel portion 2, the tire portion 7, and the tread member 5 are formed in a circular ring shape when viewed from the side. The wheel portion 2, the tire portion 7, and the tread member 5 share a common central axis and are positioned coaxially.

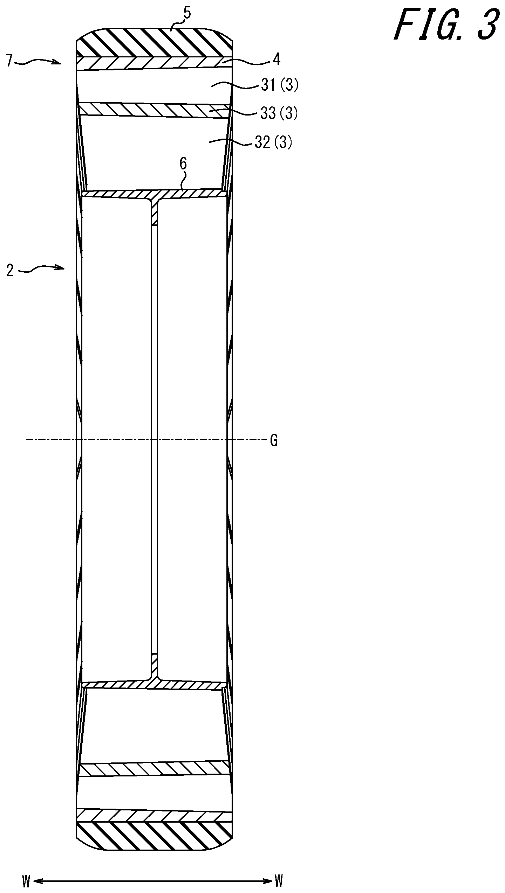

In the following, the common central axis of the wheel portion 2, the tire portion 7, and the tread member 5 is referred to as an axial center G, and the direction along the axial center G is referred to as the width direction (direction W in Figure 3, which is the same as the axial direction). Also, when viewed from the axial direction, the direction going around the axial center G is referred to as the circumferential direction (direction C in Figure 1), and the direction intersecting the axial center G is referred to as the radial direction (direction R in Figure 1). In addition, the front of the tire 100 when viewed in the width direction is sometimes simply referred to as the side of the tire 100.

The center points in the width direction of the wheel portion 2, the tire portion 7, and the tread member 5 coincide with each other. In a cross-sectional view along both the width direction and the radial direction, the wheel portion 2, the tire portion 7, and the tread member 5, as a whole, present a line-symmetrical shape based on a line passing through the center in the width direction (the tire equator).

The wheel portion 2 is to be attached to the axle of the small mobility vehicle 200 (see Figure 2) and is the base to which the tire portion 7 is mounted. The outer circumferential surface (the surface on the outer side in the radial direction) of the wheel portion 2 is circular, for example.

As mentioned above, the tire portion 7 has the inner rim 6, the outer rim 4, and the connecting member 3. The inner rim 6 is formed in a circular ring shape. The outer circumferential surface of the wheel portion 2 is placed on the inner side of the ring of the inner rim 6, and the inner rim 6 is fitted on the outer side of the wheel portion 2 and fixed (attached) thereto.

The material forming the tire portion 7, i.e., the inner rim 6, the connecting member 3 and the outer rim 4, may be a synthetic resin, such as a thermoplastic resin. The elastic modulus of the material forming the tire portion 7 is, for example, 170 MPa or more and 1500 MPa or less. The tire portion 7 may be formed as a single unit, for example by injection molding.

The tire portion 7 and the wheel portion 2 may be formed as a single unit, or they may be formed separately.

The inner rim 6 is the connection part that attaches the tire portion 7 to the wheel portion 2, and is the base that supports the tire portion 7 on the wheel portion 2. The inner rim 6 is attached to the axle via the wheel portion 2. The center axes of the inner rim 6 and the outer rim 4 are arranged coaxially with the axial center G. The inner rim 6, the connecting member 3 and the outer rim 4 are arranged such that their center points in the width direction coincide with each other.

The outer rim 4 is formed in a circular ring shape, and is a member to which the tread member 5 is attached on the outer surface thereof. The outer rim 4 is formed so that it can be elastically deformed at least toward the inner side in the radial direction. The outer rim 4 is arranged to surround the inner rim 6 from the outer side in the radial direction. The outer rim 4 is supported by the inner rim 6 via the connecting member 3, which will be described later.

The connecting member 3 is a member that is arranged between the outer circumferential surface of the inner rim 6 and the inner circumferential surface of the outer rim 4, and connects the outer circumferential surface of the inner rim 6 and the inner circumferential surface of the outer rim 4. The connecting member 3 is a plate-like member that extends radially from the outer circumferential surface of the inner rim 6 to the inner circumferential surface of the outer rim 4. The connecting member 3 has a curved plate-like shape as a whole, with the front and back surfaces facing the circumferential or radial direction, and the side surfaces facing the axial direction. The extending direction of the connecting member 3 is slightly inclined in the circumferential direction. A plurality of connecting members 3 are arranged between the outer circumferential surface of the inner rim 6 and the inner circumferential surface of the outer rim 4, and the connecting members 3 that are adjacent to each other are arranged at equal intervals in the circumferential direction.

The connecting member 3 is formed of a material that can be elastically deformed, and it connects the outer circumferential surface of the inner rim 6 and the inner circumferential surface of the outer rim 4 in a way that allows relative elastic deformation.

As an example, the connecting member 3 has an outer base portion 31 that supports the outer rim 4, an inner base portion 32 that is supported by the inner rim 6, and a middle portion 33 that connects the outer base portion 31 and the inner base portion 32.

The outer base portion 31 extends inward in the radial direction from the inner circumferential surface of the outer rim 4 and toward one side in the circumferential direction. The front and back surfaces of the outer base portion 31 face in the circumferential direction. In other words, the outer base portion 31 extends inward in the radial direction from the inner circumferential surface of the outer rim 4, while inclining toward one side in the circumferential direction.

The middle portion 33 extends inward in the radial direction from a radially inner end portion of the outer base portion 31 and toward one side in the circumferential direction. In other words, the middle portion 33 extends inward in the radial direction from the radially inner end portion of the outer base portion 31, while inclining toward the one side in the circumferential direction. The connection part between the outer base portion 31 and the middle portion 33 is curved so that it is convex toward the other side in the circumferential direction. In other words, the middle portion 33 extends at a greater angle toward the one side in the circumferential direction than the outer base portion 31.

The inner base portion 32 extends inward in the radial direction from a radially inner end portion of the middle portion 33 and toward the one side in the circumferential direction, and is connected to the outer circumferential surface of the inner rim 6. In other words, the inner base portion 32 extends inward in the radial direction from the radially inner end portion of the middle portion 33, while inclining toward the one side in the circumferential direction. The connection part between the middle portion 33 and the inner base portion 32 is curved so that it is convex toward the one side in the circumferential direction.

The tread member 5 is formed as a cylindrical shape that extends in the tread width direction around the axial center G. The tread member 5 is fitted and fixed (mounted) to the outer side of the outer rim 4. As illustrated in Figure 3, the tread member 5 may cover not only the outer circumferential surface of the outer rim 4 but also the outer edge in the radial direction of the side of the outer rim 4 facing the width direction. The elastic modulus of the material forming the tread member 5 may be smaller than that of the material forming the tire portion 7. For example, the tread member 5 is formed from natural rubber or vulcanized rubber obtained by vulcanizing rubber composition, or thermoplastic material, etc.

As illustrated in Figure 1, the visual recognition area is formed on the surface of at least one of the inner rim 6, the outer rim 4, and the connecting member 3, on the side of the tire 100. The visual recognition area is an area with optical properties that have a reflectance of 40 % or more and 80 % or less for light in the first wavelength range of 500 nm or more and 510 nm or less, and a reflectance ratio of 0.4 or less, which is a ratio of minimum reflectance in a second wavelength range of 420 nm or more and 650 nm or less to maximum reflectance in the second wavelength range.

The sensitivity of the human eye to wavelengths of light includes a sense of color and a sense of brightness, and it is known that perception differs depending on the wavelength as well. For example, the light that the human eye perceives as the brightest is yellow-green light with a wavelength of 555 nm.

In the human eye, there are two types of photoreceptor cells in the retina: cones and rods. The way that the cones and the rods function differ depending on the intensity of the light. The cones functions mainly in bright environments and the rods functions mainly in dark environments. The rods are not involved in color vision, but they have high sensitivity. In the dark, cone cells hardly work, and rod cells work. The cones are sensitive to color (wavelength), but insensitive to light intensity (brightness). Therefore, color perception is best achieved in bright environments where the cones are dominant. In dark environments, the rods function predominantly, so while color perception is reduced, brightness and darkness can be perceived well.

The cones are classified into three types, which are called S cones, M cones, and L cones. The S cones perceive mainly blue (absorption maximum wavelength: 419 nm), the M cones perceive mainly green (absorption maximum wavelength: 531 nm), and the L cones perceive mainly red (absorption maximum wavelength: 558 nm). The balance of light perceived by these three types of cones changes the color perceived by humans (the so-called three primary colors of light).

As described above, in environments where the visual object is bright, the cones function predominantly. This state is called photopic vision. The wavelength of light that is perceived as the brightest in the photopic vision is 555 nm (yellow-green light) as described above.

In environments where the visual object is dark, the rods function predominantly as described above. This state is called scotopic vision. In scotopic vision, the wavelength of light that is perceived as brightest is shifted to the shorter wavelength side than in the photopic vision. The wavelength perceived as the brightest in the scotopic vision is 507 nm (light blue light).

As the visual object transitions from a bright environment to a dark environment, the wavelength of light that is perceived as the brightest shifts from 555 nm to 507 nm. This phenomenon is known as the Purkinje effect.

The above-mentioned first wavelength range (wavelength of 500 nm or more and 510 nm or less) is set as a region near 507 nm, which is the wavelength that is perceived as the brightest in scotopic vision. When the reflectance of the visual recognition area in the first wavelength range is greater than a certain value (in this embodiment, 40 % or more), visibility in dark environments will be improved. When the reflectance of the visual recognition area in the first wavelength range exceeds a certain value (in this embodiment, 80 % or more), it may not be possible to express the desired color in a bright environment. Because the reflectance of light in the first wavelength range in the visual recognition area of the tire 100 is 40 % or more and 80 % or less, the tire 100 (visual recognition area) is highly visible in dark environments, and also, the tire 100 can express the desired color in bright environments.

The above-mentioned second wavelength range (420 nm or more, 650 nm or less) is set as the range that includes the three central maximum wavelengths sensed by the cones. When each of the three types of cones senses light that is too strong (i.e. light that is close to or exceeds the detection sensitivity), visual objects appear whitish to the human eye. For example, during the daytime, outdoors where strong light shines, visual objects may appear whitish. However, in the case of the tire 100, the reflectance ratio, which is the ratio of the minimum reflectance in the second wavelength range to the maximum reflectance in the second wavelength range in the visual recognition area, is 0.4 or less, therefore, the cones can perceive a moderate difference in the light of the three central maximum wavelengths, and it is possible to avoid the tire 100 (visual recognition area) appearing whitish. This makes it possible to ensure that the color of the tire 100 (visual recognition area) is clearly visible to people even in bright environments, and that the tire 100 (visual recognition area) is clearly visible.

Therefore, the tire 100 is highly visible both day and night.

The visual recognition area may be formed on a part of the surface or the entire surface of the inner rim 6, the connecting member 3, and the outer rim 4. The visual recognition area is formed on the side of at least in the tire portion 7. In the small mobility vehicle 200 (see Figure 2), the tires 100 are installed to the vehicle body 9 so that the visual recognition area is exposed on the side of the vehicle body 9. In order to improve the visibility of the tire, it is preferable to make the entire side of the tire (the surface that is exposed on the side of the vehicle body 9) a visual recognition area.

For example, the visual recognition area may be formed on the surface of at least one of the inner rim 6, the connecting member 3, and the outer rim 4. In addition, the visual recognition area may be formed in a part of the inner rim 6, the connecting member 3, and the outer rim 4, respectively.

The optical properties of the visual recognition area may be achieved by coating the tire portion 7. In other words, the visual recognition area in the tire portion 7 may be formed by a coating film. Although the tire 100 undergoes elastic deformation towards the inner side in the radial direction, due to its structural characteristics as a non-pneumatic tire, even when lateral force is applied during turning, deformation due to the lateral force is less likely to occur compared to pneumatic tires. Therefore, the peeling of the coating film that forms the visual recognition area is not accelerated by the deformation of the tire, and durability is improved with regard to maintaining visibility.

In the visual recognition area, it is even better if the reflectance of light in the first wavelength range is 50 % or more and 80 % or less. If the reflectance of light in the first wavelength range is 50 % or more, the visibility of the tire 100 in dark environments will be further improved.

As mentioned above, the material forming the inner rim 6, the connecting member 3 and the outer rim 4, i.e. the tire portion 7, may be synthetic resin. When the inner rim 6, the connecting member 3 and the outer rim 4 are formed of synthetic resin, this synthetic resin can be colored or tinted with pigments or other materials, and the surfaces of these can be used as the visual recognition area with the above-mentioned optical properties. When the synthetic resin is colored or tinted with pigments or other materials, for example, even if the surface of the tire portion 7 is scraped off, the underlying surface that appears after scraping will have the same optical properties as the original surface, therefore, the optical properties as the visual recognition area can be maintained. In other words, durability is improved with regard to maintaining visibility.

As illustrated in Figure 2, the small mobility vehicle 200 usually uses a small body 9. The body of the small mobility vehicle 200 has a small bonnet, for example, and the tires 100 are relatively prominent in the design. For this reason, the small mobility vehicle 200 has a greater effect on improving visibility due to the tires 100 than conventional vehicles.

In the small mobility vehicle 200, it is preferable to install the tires so that the visual recognition area is exposed in a side view. This allows the small mobility vehicle 200 to enjoy the benefits of improved visibility provided by the tires 100 to a greater extent. This makes the visual recognition area stand out more in the side view of the small mobility vehicle 200, and improves the overall visibility of the small mobility vehicle 200. This improves the safety of the small mobility vehicle 200.

Because the small mobility vehicle 200 usually uses a small body 9, it does not often travel at high speeds like conventional vehicles. For example, the small mobility vehicle 200 is unlikely to turn while traveling at high speed. Therefore, the effect of lateral force on the tire 100 will be smaller than that on conventional vehicles. As a result, when the tires 100 are installed on the small mobility vehicle 200, the durability of the tires 100 will be relatively high from the perspective of visibility and from the structural perspective.

### EXAMPLES

Examples will be described below.

### (Example 1)

Plate-shaped test pieces of synthetic resin (polyester-based elastomer resin) were prepared, that can be used for the inner rim, the outer rim, and the connecting members of a non-pneumatic tire in this embodiment, and test pieces 1-1 to 1-5 were created by applying separately mixed and tinted blue-based paint (several colors with different hue) to form a visual recognition area.

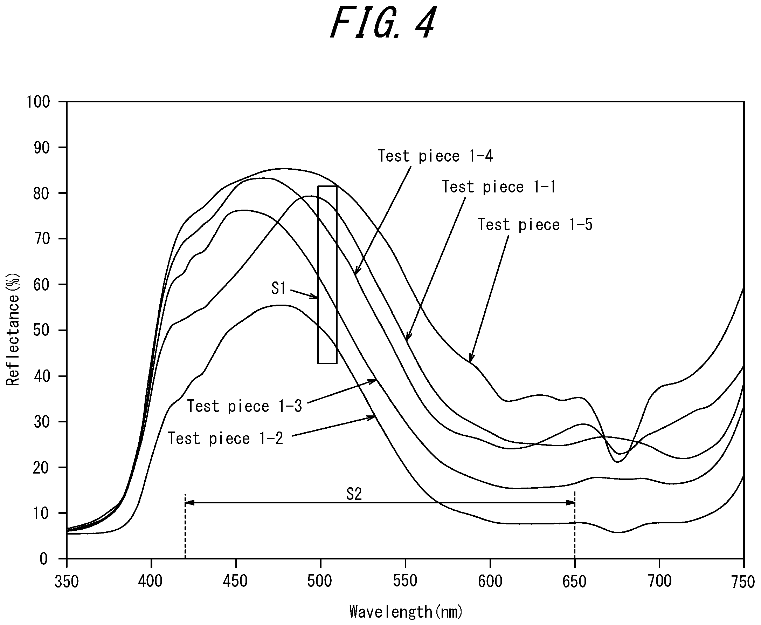

For these test pieces 1-1 to 1-5, the reflectance and the distribution of reflectance for each wavelength were measured using a spectrophotometer. The reflectance of these pieces is given in Table 1. In addition, the distribution of reflectance for each wavelength is given in Figure 4. In the graph provided in Figure 4, the vertical axis represents reflectance and the horizontal axis represents wavelength.

**[Table 1]**

| Test piece | Test piece 1-1 | Test piece 1-2 | Test piece 1-3 | Test piece 1-4 | Test piece 1-5 |
|---|---|---|---|---|---|
| Reflectance of light in first wavelength range | 77.2 | 48.3 | 57.4 | 71.4 | 82.7 |
| Pass/Fail for reflectance (40 % or more and 80 % or less) | Pass | Pass | Pass | Pass | Fail |
| Maximum reflectance of light in second wavelength range | 79.4 | 55.5 | 76.3 | 83.3 | 85.2 |
| Minimum reflectance of light in second wavelength range | 24.9 | 7.6 | 15.4 | 24.1 | 34.5 |
| Reflectance ratio | 0.31 | 0.14 | 0.20 | 0.29 | 0.41 |
| Pass/Fail for reflectance ratio (0.4 or less) | Pass | Pass | Pass | Pass | Fail |
| Overall judgement | Pass | Pass | Pass | Pass | Fail |
| Visibility in dark place | Pass | Pass | Pass | Pass | Fail |
| Visibility in blight place | Pass | Pass | Pass | Pass | Fail |
| Overall judgement of visibility | Pass | Pass | Pass | Pass | Fail |

In the graph in Figure 4, the area where the reflectance of light in the first wavelength range is 40 % or more and 80 % or less is given as an area S1, enclosed by a solid rectangle. The second wavelength range is given as a range S2, indicated by an arrow.

Based on the graph in Figure 4, test pieces with an average reflectance of 40 % or more and 80 % or less in the first wavelength range were judged to be passed, and all others were judged to be failed. In Table 1, the results of these test pieces are indicated as "Pass" or "Fail" in the row "Pass/Fail for reflectance".

In addition, the maximum reflectance and the minimum reflectance in the second wavelength range were obtained based on the graph in Figure 4. Those are given in Table 1. In addition, the ratio of the minimum reflectance to the maximum reflectance (minimum reflectance/maximum reflectance) is given in Table 1 as the "Reflectance ratio".

Test pieces with a reflectance ratio of 0.4 or less were judged to be passed, and all others were judged to be failed. In Table 1, the results of these test pieces are indicated as "Pass" or "Fail" in the row "Pass/Fail for reflectance ratio".

In Table 1, test pieces that were judged to be passed for both the "Pass/Fail for reflectance" and the "Pass/Fail for reflectance ratio" were judged to be passed, and all others were judged to be failed in the overall judgement. In Table 1, these pass/fail results are indicated as "Pass" or "Fail" in the row "Overall judgement". It will be noted that the test pieces that ate judged to have passed in the row "Overall judgment" corresponds to the test pieces that have the visual recognition area according to this embodiment.

Furthermore, these test pieces were shown to test subjects in both a bright room (illuminance of 2000 lux) and a dark room (illuminance of 150 lux), and if the number of people who judged them to be conspicuous or easy to see in both the bright and dark rooms exceeded half the total, the test pieces were judged to be passed, and all others were judged to be failed. The test pieces were placed on a black cloth and the test subjects were allowed to visually inspect them. In Table 1, the results of these test pieces are indicated as "Pass" or "Fail" in the row "visibility in bright place" and the row "visibility in dark place". There were at least three test subjects.

In Table 1, test pieces that passed both the "visibility in bright place" and the "visibility in dark place" were judged to be passed, and all others were judged to be failed. In Table 1, these pass/fail results are indicated as "Pass" or "Fail" in the row "Overall judgement of visibility". The results of the "Overall judgment of visibility" were consistent with the results of the "Overall judgment" which were based on the reflectance of the first and second wavelength ranges. In other words, it was concluded that a test piece having a visual recognition area with the optical properties according to this embodiment is easy to see both in bright and dark places.

### (Example 2)

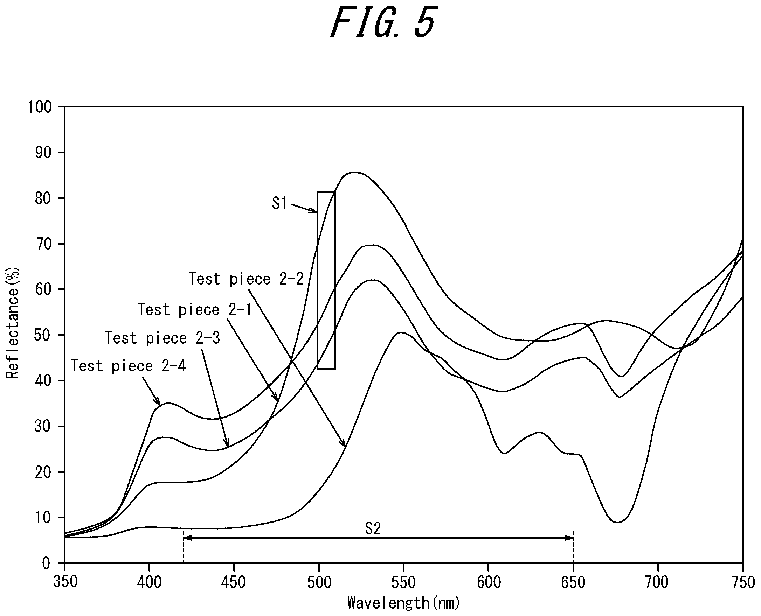

Unlike in Example 1, test pieces 2-1 to 2-5 were created by applying green paint to form a visual recognition area, and each was evaluated in the same way as in Example 1. The evaluation results are given in Table 2 and Figure 5 (a graph providing the distribution of reflectance).

| Test piece | Test piece 2-1 | Test piece 2-2 | Test piece 2-3 | Test piece 2-4 |
|---|---|---|---|---|
| Reflectance of light in first wavelength range | 77.5 | 18.8 | 48.4 | 56.8 |
| Pass/Fail for reflectance (40 % or more and 80 % or less) | Pass | Fail | Pass | Pass |
| Maximum reflectance of light in second wavelength range | 85.5 | 50.4 | 62.1 | 69.8 |
| Minimum reflectance of light in second wavelength range | 17.7 | 7.6 | 24.8 | 31.6 |
| Reflectance ratio | 0.21 | 0.15 | 0.40 | 0.45 |
| Pass/Fail for reflectance ratio (0.4 or less) | Pass | Pass | Pass | Fail |
| Overall judgement | Pass | Fail | Pass | Fail |
| Visibility in dark place | Pass | Fail | Pass | Pass |
| Visibility in blight place | Pass | Pass | Pass | Fail |
| Overall judgement of visibility | Pass | Fail | Pass | Fail |

### (Example 3)

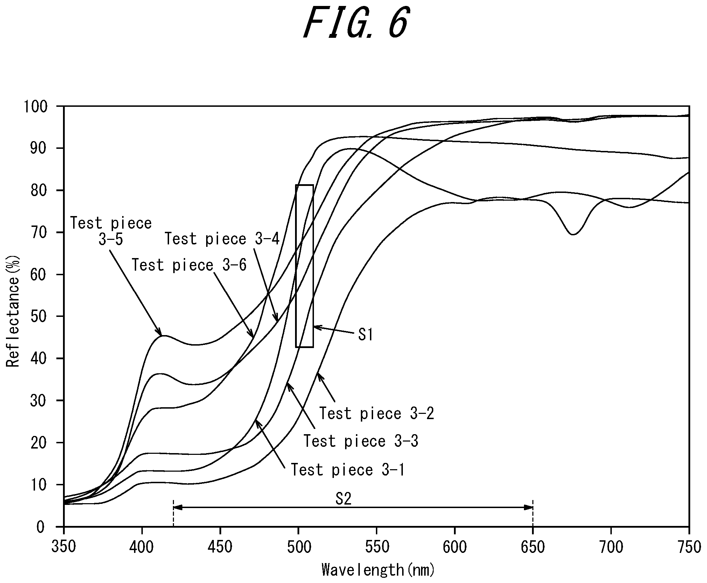

Unlike in Example 1, test pieces 3-1 to 3-4 were created by applying yellow paint to form a visual recognition area, and each was evaluated in the same way as in Example 1. The evaluation results are given in Table 3 and Figure 6 (a graph providing the distribution of reflectance).

| Test piece | Test piece 3-1 | Test piece 3-2 | Test piece 3-3 | Test piece 3-4 | Test piece 3-5 | Test piece 3-6 |
|---|---|---|---|---|---|---|
| Reflectance of light in first wavelength range | 72.0 | 30.2 | 48.4 | 60.9 | 69.7 | 85.2 |
| Pass/Fail for reflectance (40 % or more and 80 % or less) | Pass | Fail | Pass | Pass | Pass | Fail |
| Maximum reflectance of light in second wavelength range | 89.9 | 78.3 | 96.8 | 96.9 | 97.2 | 92.7 |
| Minimum reflectance of light in second wavelength range | 13.1 | 10.2 | 17.1 | 33.6 | 43.2 | 28.2 |
| Reflectance ratio | 0.15 | 0.13 | 0.18 | 0.35 | 0.44 | 0.30 |
| Pass/Fail for reflectance ratio (0.4 or less) | Pass | Pass | Pass | Pass | Fail | Pass |
| Overall judgement | Pass | Fail | Pass | Pass | Fail | Fail |
| Visibility in dark place | Pass | Fail | Pass | Pass | Pass | Fail |
| Visibility in blight place | Pass | Pass | Pass | Pass | Fail | Pass |
| Overall judgement of visibility | Pass | Fail | Pass | Pass | Fail | Fail |

### (Example 4)

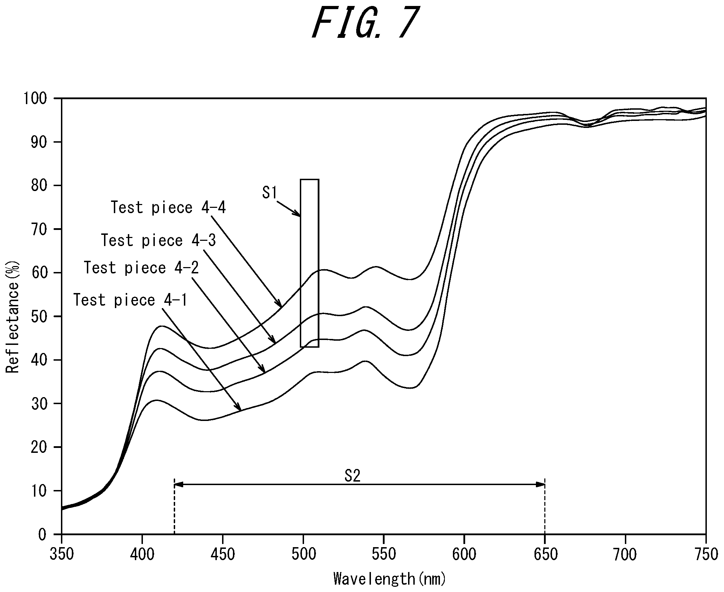

Unlike in Example 1, test pieces 4-1 to 4-4 were created by appluing red paint to form a visual recognition area, and each was evaluated in the same way as in Example 1. The evaluation results are given in Table 4 and Figure 7 (a graph providing the distribution of reflectance).

| Test piece | Test piece 4-1 | Test piece 4-2 | Test piece 4-3 | Test piece 4-4 |
|---|---|---|---|---|
| Reflectance of light in first wavelength range | 36.5 | 44.0 | 49.7 | 58.9 |
| Pass/Fail for reflectance (40 % or more and 80 % or less) | Fail | Pass | Pass | Pass |
| Maximum reflectance of light in second wavelength range | 93.6 | 95.0 | 95.8 | 96.5 |
| Minimum reflectance of light in second wavelength range | 26.1 | 32.4 | 37.7 | 42.7 |
| Reflectance ratio | 0.28 | 0.34 | 0.39 | 0.44 |
| Pass/Fail for reflectance ratio (0.4 or less) | Pass | Pass | Pass | Fail |
| Overall judgement | Fail | Pass | Pass | Fail |
| Visibility in dark place | Fail | Pass | Pass | Pass |
| Visibility in blight place | Pass | Pass | Pass | Fail |
| Overall judgement of visibility | Fail | Pass | Pass | Fail |

The results on the "Overall judgement of visibility" in Examples 2 to 4 were also consistent with the results on the "overall judgement" which were judged based on the reflectance of light in the first and second wavelength ranges. In other words, it was concluded that the test pieces with a visual recognition area having the optical properties of this embodiment are easy to see in both bright and dark places, regardless of the color.

In this way, a non-pneumatic tire and a small mobility vehicle can be provided.

### [Other e4mbodiments]

(1) In the above embodiment, the cases have explained where the tire 100 is mounted on the small mobility 200, but the tire 100 is not limited to being used by being mounted on the small mobility 200. Even if the tire 100 is used on other vehicles, it will still have the effect of being highly visible both day and night.
(2) Although, in the above embodiment, examples were provided in which the visual recognition areas in blue, green, yellow, and red colors respectively were evaluated, the visual recognition area may be of any other color.

Furthermore, the configuration disclosed in the above embodiment (including alternative embodiments, hereinafter the same) can be applied in combination with the configuration disclosed in other embodiments, as long as there is no contradiction. In addition, the embodiments disclosed herein are examples, and the embodiments of this disclosure are not limited to these examples, and can be modified as appropriate within the scope of not deviating from the purpose of this disclosure.

### INDUSTRIAL APPLICABILITY

This disclosure can be applied to non-pneumatic tires and small mobility vehicles.

### REFERENCE SIGNS LIST

- 100: Tire (Pneumatic tire)
- 11: Outer base portion
- 12: Inner base portion
- 13: Middle portion
- 2: Wheel portion
- 200: Small mobility vehicle
- 3: Connecting member
- 4: Outer rim
- 5: Tread member
- 6: Inner rim
- 7: Tire portion
- 9: Vehicle body
- B: Direction
- C: Direction
- F: Direction
- G: Axial center
- R: Direction
- W: Direction
- S1: Area
- S2: Range

## Claims

1. A non-pneumatic tire, comprising
an inner rim that is to be attached to an axle;
an outer rim that surrounds the inner rim from an outer side in a radial direction and has a tread member attached to an outer circumferential surface thereof; and
a plurality of connecting members that connect an outer circumferential surface of the inner rim to an inner circumferential surface of the outer rim, wherein
at least one of the inner rim, the outer rim, and the connecting member is formed with a visual recognition area, on a surface that intersects with an axial direction of the outer rim, with optical properties that have a reflectance of 40% or more and 80% or less for light in a first wavelength range of 500 nm or more and 510 nm or less, and a reflectance ratio of 0.4 or less, which is a ratio of a minimum reflectance in a second wavelength range of 420 nm or more and 650 nm or less to a maximum reflectance in the second wavelength range.

2. The non-pneumatic tire as described in claim 1, wherein the reflectance for light in the first wavelength range is 50% or more and 80% or less.

3. The non-pneumatic tire as described in claim 1, wherein at least one of the inner rim, the outer rim, and the connecting member is made of synthetic resin.

4. The non-pneumatic tire as described in claim 3, wherein the synthetic resin is colored and has the optical properties.

5. The non-pneumatic tire as described in claim 1, wherein the surface of at least one of the inner rim, the outer rim and the connecting member, which intersects with the axial direction of the outer rim, is formed with a coating film having the optical properties.

6. The non-pneumatic tire as described in claim 1, wherein the surface of the connecting member has the optical properties.

7. A small mobility vehicle, comprising
a vehicle body with an overall length of 3.4 m or less; and
wheels that support the vehicle body and allow the vehicle body to move, wherein
the wheel has a non-pneumatic tire, and
the non-pneumatic tire comprises,
an inner rim that is to be attached to an axle;
outer rim that surrounds the inner rim from an outer side in a radial direction and has a tread member attached to an outer circumferential surface thereof; and
a plurality of connecting members that connect an outer circumferential surface of the inner rim to an inner circumferential surface of the outer rim, wherein
at least one of the inner rim, the outer rim, and the connecting member is formed with a visual recognition area, on the surface exposed on the side of the vehicle body, with optical properties that have a reflectance of 40% or more and 80% or less for light in a first wavelength range of 500 nm or more and 510 nm or less, and a reflectance ratio of 0.4 or less, which is a ratio of a minimum reflectance in a second wavelength range of 420 nm or more and 650 nm or less to a maximum reflectance in the second wavelength range.
